Europäisches Patentamt

**(19)** European Patent Office

Office européen des brevets

**(11)** Publication number: **0 014 013**
**B1**

**(12)** EUROPEAN PATENT SPECIFICATION

**(45)** Date of publication of patent specification: **12.01.83**  **(51)** Int. Cl.³: **F 16 G  5/16**

**(21)** Application number: **80200035.6**

**(22)** Date of filing: **15.01.80**

**(54)** A composite driving belt with transverse elements provided with mutual coupling means.

**(30)** Priority: **19.01.79 NL 7900435**

**(43)** Date of publication of application:
**06.08.80 Bulletin 80/16**

**(45)** Publication of the grant of the patent:
**12.01.83 Bulletin 83/2**

**(84)** Designated Contracting States:
**AT BE CH DE FR GB IT LU NL SE**

**(56)** References cited:
**CH - A - 256 918**
**DE - A - 1 960 350**
**DE - A - 2 414 989**
**DE - A - 2 557 724**
**US - A - 3 720 113**
**US - A - 3 949 621**
**US - A - 4 080 841**

**(73)** Proprietor: **Van Doorne's Transmissie B.V.**
**Dr. Hub van Doorneweg 120**
**NL-5026 RA  Tilburg (NL)**

**(72)** Inventor: **Lamers, Hendricus Franciscus**
**Polderstraat 12**
**Goirle (NL)**

**(74)** Representative: **Louet Feisser, Arnold Abraham**
**Alfred**
**Postbus 500**
**NL-5000 AM  Tilburg (NL)**

Courier Press, Leamington Spa, England.

## A composite driving belt with transverse elements provided with mutual coupling means

The invention relates to a composite driving belt of substantially trapezium-shaped cross-section for application on V-shaped pulleys, said driving belt comprising an endless carrier in the form of at least one metal band and plurality of transverse elements abutting against each other with parallel parts of their head sides and slidably mounted on the carrier, said transverse elements at least at one of the head sides being bevelled radially inwardly underneath the neutral line of the driving belt for enabling the bending of the driving belt whereby the transverse elements contact each other through a tilting line where the bevel passes into the parallel part of the head side, said transverse elements being fitted with coupling means in the form of at least one projection at one head side and a substantially corresponding recess at the other head side.

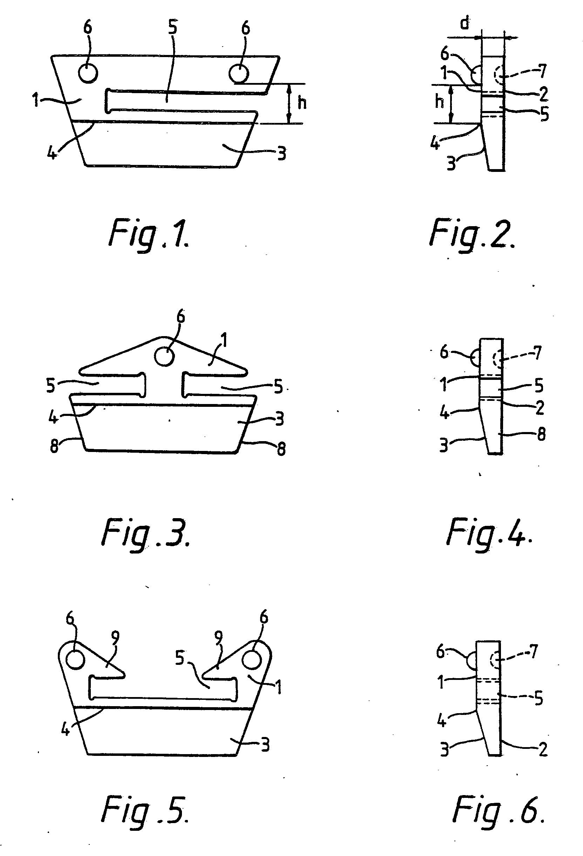

Such a driving belt in which the power substantially is transmitted by pushing forces between the transverse elements, is known e.g. from US—A—3,949,621 (Figs. 1 and 5). Said projections resp. recesses serving for centering the transverse elements relative to each other. Such a centering may be desirable for preventing the transverse elements in the straight parts of the driving belt from shifting relative to each other.

However, it has been established experimentally that a slight mutual shift possibility of the transverse elements is desired as long as the transverse elements are present in situ of the pulley, since each transverse element should have the freedom to be clamped optimally between the sheaves of the pulley. Also in the parts of the belt between the pulleys had to be a slight shift possibility in case of (slight) alignment errors of the pulleys, such as those which occur in particular with pulleys the mutual distance between the conical sheaves of which is changed for varying the transmission ratio. The pulleys then do not lie exactly in one flat plane, so that a kind of torsion may be occur in the driving belt.

It is the object of the invention to provide a driving belt with transverse elements provided with coupling means in the form of projections resp. recesses, whereby on the one end a proper mutual centering of the elements is effected, while on the other end the transverse elements are adapted to shift sufficiently in relation to each other. To this effect according to the invention, the projections resp. recesses are disposed at a distance above the tilting line of the transverse element, whereby the product of the distance between the tilting line and said at least one projection resp. recess and the thickness of the transverse element, i.e. the distance between the parallel parts of both head sides, both measured in mm, is larger than 3. Thus the mutual coupling of the transverse elements remains completely operative in those parts of the driving belt that are in a straight condition, but as soon as a slight bending of the driving belt takes place, i.e. the transverse elements are tilting relative to each other, during which they remain in mutual contact through the tilting line, the projections and recesses come fully out of engagement so that the mutual centering of the transverse elements is eliminated. The belt being tensioned around the pulleys includes straight parts between the pulleys and curved parts which are in contact with the pulleys. In the straight parts the parallel surfaces of the head sides of two abutting transverse elements contact each other, so the coupling means are in engagement. In the curved parts of the belt two abutting transverse elements are tilting in respect of each other, so there is no engagement of the coupling means.

When running the belt there will not be an abrupt change from the straight parts of the belt to the parts of the belt being in contact with the pulleys and having a curvature corresponding to the running diameter of the respective pulley. Before coming in contact with the pulley there will already be a slight tilting of two abutting transverse elements and also a slight tilting takes place after the transverse elements coming out of contact with the pulley before reaching the straight part of the belt. In the construction of the belt according to the invention there will be a complete disengagement of the coupling means at a slight tilting of two abutting transverse elements as it occurs on both ends of the straight parts of the belt before respectively after the pulleys contact the transverse elements. As mentioned before such disengagement is of importance in case of alignment errors of the pulleys in which case the straight part of the belt and the part of the belt being in contact with the pulley are not lying exactly in the same flat plane.

Bending the driving belt at a given radius, the extent of mutual tilting of successive transverse elements will depend on the thickness of the transverse elements. With thinner transverse elements, the tilting will be less, so that a larger distance is required between the projections resp. recesses and the tilting line in order to bring the coupling means during slight bending out of engagement. Naturally, said distance also depends on the bending radius but it has been found experimentally that the influence of the running diameter of the driving belt in the pulley is of minor importance and that said general rule is adequate.

The invention furthermore relates to a transverse element as applicable in the above mentioned driving belt according to the invention and described in the claims.

Some embodiments of the invention will now be described, by way of example, with reference to the accompanying drawing.

The drawing shows three embodiments of transverse elements which are shown in Fig. 1 and 2; 3 and 4; 5 and 6, respectively in front view, and side view. Corresponding parts are indicated in the various embodiments with identical reference numerals.

The transverse element according to Figs. 1 and 2 is of the type as described e.g. in CH—A—256,918 (Figs. 6 and 7) and DE—A—2,414,989. The transverse elements therein are pushed in lateral direction on the carrier. The transverse element is fitted with two head sides 1, 2, which come into contact with the head sides of successive transverse elements when assembly on the carrier has taken place. Head side 1 is provided with a bevel 3. The transition between the part of head side 1 parallel to head side 2 and the bevel 3 is formed by a roll-off zone or tilting line 4. During the bending of the driving belt the transverse elements are in contact with each other through said tilting line 4.

The transverse element is provided with a recess 5 for receiving the carrier, which for example may comprise one or more endless metal bands.

Furthermore the transverse element is fitted with coupling means in the form of two projections 6 on head side 1 and two corresponding recesses 7 in head side 2. In successive transverse elements the projections 6 enmesh in the recesses 7 of the abutting transverse element, in a straight part of the driving belt, so that a mutual centering of the transverse elements is effected.

The thickness of the transverse element is indicated by d, and the distance between projection 6, resp. recess 7 and the tilting line 4 is indicated by h.

According to the invention the distance h should be sufficiently large in order to eliminate the centering effect as soon as the driving belt is bent, i.e. abutting transverse elements will slightly tilt relative to each other. It has been found experimentally that the magnitude of h should at least be such that h×d, both expressed in mm, is larger than 3, e.g. at a thickness of the transverse elements of 2 mm, distance h should consequently be larger than 1,5 mm. To thinner transverse elements pertains a larger distance h.

Figs. 3 and 4 show an embodiment of a transverse element of the type as described in US—A—3,949,621 (Fig. 1) and US—A—4,080,841 (Fig. 3). The driving belt therein is provided with a carrier comprising two endless bands or band packages, which on either side are pushed in recesses 5. During the use of the driving belt, the bands or band packages are prevented from laterally sliding out of the transverse elements by the conical sheaves of the pulley in which the driving belt runs, and which are in contact with the sides 8 of each element.

Also in this embodiment there is a substantial distance between the tilting line 4 and the projection 6 resp. recess 7.

The transverse element shown in the embodiment according to Figs. 5 and 6 is of the type as described in US—A—3,720,113. The carrier, in the form of an endless band or a band package, is pushed from above into the recess 5 of the transverse element, after which the lips 9 are bent in the position shown.

## Claims

1. A composite driving belt of substantially trapezium-shaped cross-section for application on V-shaped pulleys, said driving belt comprising an endless carrier in the form of at least one metal band and a plurality of transverse elements abutting against each other with parallel parts of their head sides (1, 2) and slidably mounted on the carrier, which transverse elements are at least at one of the head sides (1) bevelled radially inwardly underneath the neutral line of the driving belt for enabling the bending of the driving belt whereby said transverse elements contact each other through a tilting line (4) where the bevel (3) passes into the parallel part of the head side (1), said transverse elements being fitted with coupling means in the form of at least one projection (6) at one head side (1) and a substantially corresponding recess (7) at the other head side (2), characterized in that the projections (6), resp. recesses (7) lie at a distance above the tilting line (4) of the transverse elements, whereby the product of the distance (h) between the tilting line (4) and said at least one projection (6), resp. recess (7) and the thickness of the transverse element, i.e. the distance (d) between the parallel parts of both head sides (1, 2), both measured in mm, is larger than 3.

2. A transverse element for a driving belt according to claim 1, of which at least one of the head sides (1) is bevelled underneath the tilting line (4) for enabling mutual tilting of abutting transverse elements furthermore provided with one or more projections (6) on a head side (1) and substantially corresponding recesses (7) at the other head side (2), characterized in that said one or more projections (6), resp. recesses (7) lie at a distance above the tilting line (4), whereby the product of the distance (h) between the tilting line (4) and the projections (6) resp. recesses (7) and the thickness (d) of the transverse element, both measured in mm, is larger than 3.

## Patentansprüche

1. Zusammengesetzter Treibriemen mit im wesentlichen trapezförmigem Querschnitt für V-förmige Riemenscheiben, der einen endlosen Träger in Form wenigstens eines Metallbands und eine Vielzahl von Querelementen aufweist, die mit parallelen Teilen ihrer Stirnseiten (1, 2) aneinander angrenzen, verschiebbar auf dem Träger angeordnet und wenigstens an einer der Stirnseiten (1) unterhalb der neutralen Linie des Treibriemens radial nach inne abgeschrägt sind, um das Biegen des Treibriemens zu ermöglichen, wobei die Querelemente einander an einer Kipplinie (4) berühren, an der die Abschrägung (3) in den parallelen Teil der Stirnseite (1) übergeht, und wobei die Querelemente mit Kupplungsmitteln in Form wenigstens eines Vorsprungs (6) an einer Stirnseite (1) und einer im wesentlichen korrespondierenden Vertiefung (7) an der anderen Stirnseite (12) ausgerüstet sind, dadurch gekennzeichnet, dass die Vorsprünge (6) bzw. Vertiefungen (7) in einem Abstand über der Kipplinie (4) der Querelemente liegen, wobei das Produkt aus dem Abstand (h) zwischen der Kipplinie (4) und dem wenigstens einen Vorsprung (6) bzw. der wenigstens einen Vertiefung (7) und der Dicke des Querelements, d.h. dem Abstand (d) zwischen den parallelen Teilen beider Stirnseiten (1, 2), beide Grössen berechnet in mm, grösser als 3 ist.

2. Querelement für einen Treibriemen nach Anspruch 1, bei dem wenigstens eine der Stirnseiten (1) unterhalb der Kipplinie (4) abgeschrägt ist, um ein gegenseitiges Kippen aneinander angrenzender Querelemente zu ermöglichen, wobei das Querelement ausserdem mit einem oder mehreren Vorsprüngen (6) an einer Stirnseite (1) und im wesentlichen korrespondierenden Vertiefungen (7) an der anderen Stirnseite (12) versehen ist, dadurch gekennzeichnet, dass der oder die Vorsprünge (6) bzw. Vertiefungen (7) in einem Abstand über der Kipplinie (4) liegen, wobei das Produkt aus dem Abstand (h) zwischen der Kipplinie (4) und den Vorsprüngen (6) bzw. Vertiefungen (7) und der Dicke (d) des Querelements, beide Grössen gemessen in mm, grösser als 3 ist.

**Revendications**

1. Courroie de transmission composite, à section transversale essentiellement en forme de trapèze, de sorte qu'elle peut s'appliquer sur des poulies à gorge en forme de V, cette courroie de transmission comportant un support sans fin se présentant sous la forme d'au moins une bande de métal, et plusieurs éléments transversaux venant en butée l'un contre l'autre, avec des parties de leurs côtés de tête (1, 2) parallèles, et étant montés coulissants sur le support, lesquels éléments transversaux sont, au moins selon un (1) de leurs côtés de tête, biseautés radialement vers l'intérieur, au-dessous de la ligne neutre de la courroie de transmission, pour permettre à celle-ci de se courber, grâce à quoi lesdits éléments transversaux se touchent l'un l'autre par une ligne de basculement (4), le biseau (3) passant dans la partie parallèle de côté de tête (1), lesdits éléments transversaux étant pourvus de moyens d'accouplement se présentant sous la forme d'au moins une saillie (6) sur un côté (1) de tête et d'un logement de forme essentiellement correspondante (7) sur l'autre côté (2) de tête, caractérisée en ce que les saillies (6) ou respectivement les logements (7) se situent à une distance (h) au-dessus de la ligne de basculement (4), telle que le produit de cette distance par l'épaisseur de l'élément transversal, à savoir la distance (d) entre les parties parallèles des deux côtés (1, 2) de tête, toutes deux mesurées en millimètres, soit supérieur à 3.

2. Elémément transversal pour une courroie de transmission selon la revendication 1, dont l'un (1) au moins des côtés de tête est biseauté au-dessous de la ligne (4) de basculement pour permettre un basculement relatif de deux élément transversaux en contact, chaque élément étant en outre pourvu d'une ou de plusieurs saillies (6) sur un côté (1) de tête et de logements de forme essentiellement correspondante (7) sur l'autre côté (2) de tête, caractérisé en ce que les saillies (6) ou respectivement les logements (7) se situent à une distance (h) au-dessus de la ligne de basculement (4), telle que le produit de cette distance par l'épasseur (d) de l'élément transversal, toutes deux mesurées en millimètres, soit supérieur à 3.

Fig.1.

Fig.2.

Fig.3.

Fig.4.

Fig.5.

Fig.6.